Europäisches Patentamt

European Patent Office

Office européen des brevets

(19)

(11) Publication number: **0 098 740**
**A2**

# (12) EUROPEAN PATENT APPLICATION

(21) Application number: **83303801.1**

(22) Date of filing: **30.06.83**

(51) Int. Cl.³: **B 60 N 1/06**

(30) Priority: **02.07.82 GB 8219247**

(43) Date of publication of application: **18.01.84**
**Bulletin 84/3**

(84) Designated Contracting States: **DE FR GB IT SE**

(71) Applicant: **TI COX LIMITED, 177 Lenton Boulevard,**
**Nottingham NG7 2DD (GB)**

(72) Inventor: **Babbs, Frederick William, Mountfield 102A,**
**Cropwell Road, Radcliffe-on-Trent Nottingham (GB)**

(74) Representative: **Arthur, George Fitzgerald et al,**
**KILBURN & STRODE 30, John Street, London WC1N 2DD**
**(GB)**

(54) **Seat mounting.**

(57) This invention is a mounting enabling the height and atti-
tude of a motor car seat to be adjusted to suite the user's re-
quirements. A single drive (1) is provided for bell cranks (4, 12)
respectively at the front and the rear of the seat, but there is a
lost-motion connection (9) between the drive (1) and the rear
bell crank (12) so that in raising the seat the front will be
raised first, until the lost-motion has been taken up, and then
the front and the rear will be raised together until the rear of the
seat is at the desired height, and the the drive can be reversed
to bring the front of the seat to the desired height (provided it
is within the amount of lost-motion provided) without disturb-
ing the height of the rear of the seat. The equipment can be
easily modified for independent adjustment of the front and the
rear of the seat by disabling the lost-motion drive and including
a second drive (53) for the rear bell crank (12).

The lost-motion device between front and rear drive shafts
(2) and (10) includes a pawl (18) rotatably mounted on each
shaft, and stops (36, 34) through which the pawls can drive
after a certain amount of rotation.

.1.

<u>SEAT MOUNTING</u>

This invention relates to seat mountings, for example, mountings for seats in a car or other vehicle, and one object is to provide a simple means for enabling the height of the seat and also the tilt angle of the seat to be adjusted.

According to the present invention a seat mounting comprises front and rear lifting means, a drive for one of the lifting means, and a lost motion connection between the two lifting means, or between the drive and the other lifting means, whereby operation of the drive first operates one of the lifting means and then operates both lifting means together, whereas reversal of the drive will first operate the one lifting means alone in the opposite sense.

After the lost motion has been taken up drive can be continued until the said other of the lifting means is at the desired height, and then the drive can be reversed, so that the one of the lifting means will move in the other sense unaccompanied by movement·of the said other of the lifting means until the tilt angle is as desired.

In practice an adjustment in tilt angle of about $2\frac{1}{2}^{\circ}$ is sufficient for most needs and the amount of lost motion can be easily designed to be sufficient to allow that much differential movement between the front and rear lifting means.

There may be a motor arranged to drive a drive shaft for say the front lifting means, possibly through a worm and worm gear, and then a second shaft for the other lifting means can be coupled to the first drive shaft through a simple lost motion connection which is conveniently positioned between adjacent ends of the two shafts.

Such a shaft drive enables lifting or lowering at front or rear to be affected by rotating a bell crank about a transverse horizontal axis with a horizontal crank arm pivotally connected to the seat, and a vertical crank arm coupled to a threaded part of the shaft through a threaded trunnion which cannot rotate about the thread axis, but can swivel in the bell crank.

A biasing spring tending to lift the seat can compensate for much of the weight of the average passenger, so that even during lifting the motor does not have to provide excessive power and a fractional horsepower motor can be used.

The mounting is conveniently integral with a fore-and-aft seat adjustment mechanism.

The seat mounting may be one of a pair one for each side of a seat, and then there may be means for coupling the respective front and rear lifting means so that a single motor can drive both mountings and lift an lower the entire seat.

According to another aspect of the invention, a lost motion device for a shaft drive comprises axially spaced co-axial shafts, two drive members, one rotatably mounted in relation to each shaft, and a stop on each shaft arranged to make contact with the drive member on the other shaft at a certain point of revolution.

The invention may be carried into practice in various ways, and one embodiment will now be described by way of example, with reference to the accompanying drawings: in which

FIGURE 1 is a side elevation of one component of a mounting for a motor car seat;

FIGURE 2 is a detail of a lost motion device in the mechanism of FIGURE 1;

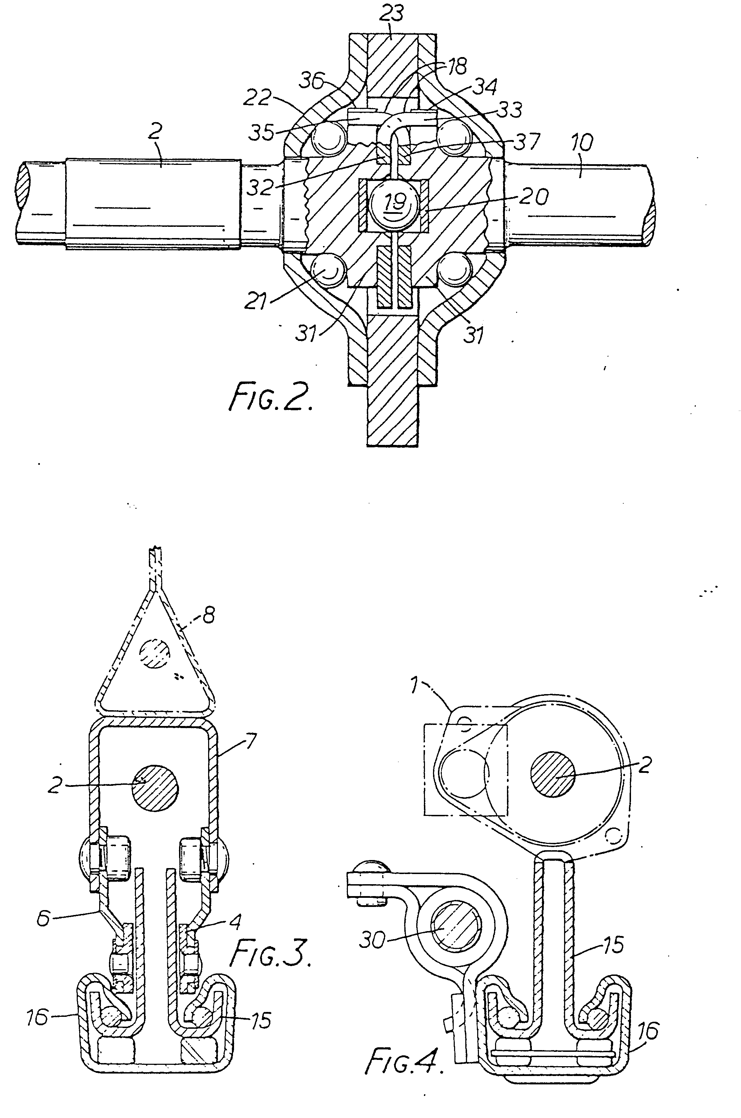

FIGURE 3 is a section on the line A in FIGURE 1;

FIGURE 4 is a section on the line B in FIGURE 1;

FIGURE 5 is a plan view of the rear part of the mechanism of FIGURE 1; and

FIGURE 6 is a section on the line DD in FIGURE 1.

It is to be understood that there are two mounting components, each as shown in the drawings, one at each side of the seat, and that each consists of a fore-and-aft runner 16 fixed to the floor of the vehicle, and a relatively movable sliding runner 15 with an upstanding web from which the seat is supported.

The two runners 15 have a screw drive 30 for moving them forwards or backwards together and means' for locking them in a selected position of fore-and-aft adjustment, and may be generally as described in European Patent Application No. 81301464.4 published under the No. 37726 on the 14th October, 1981 ( Case 45+46).

0098740

The present invention is concerned with means for supporting the car seat 8 from the web of the runners 15 in a manner enabling height adjustment and tilt angle to be readily adjusted by a single means.

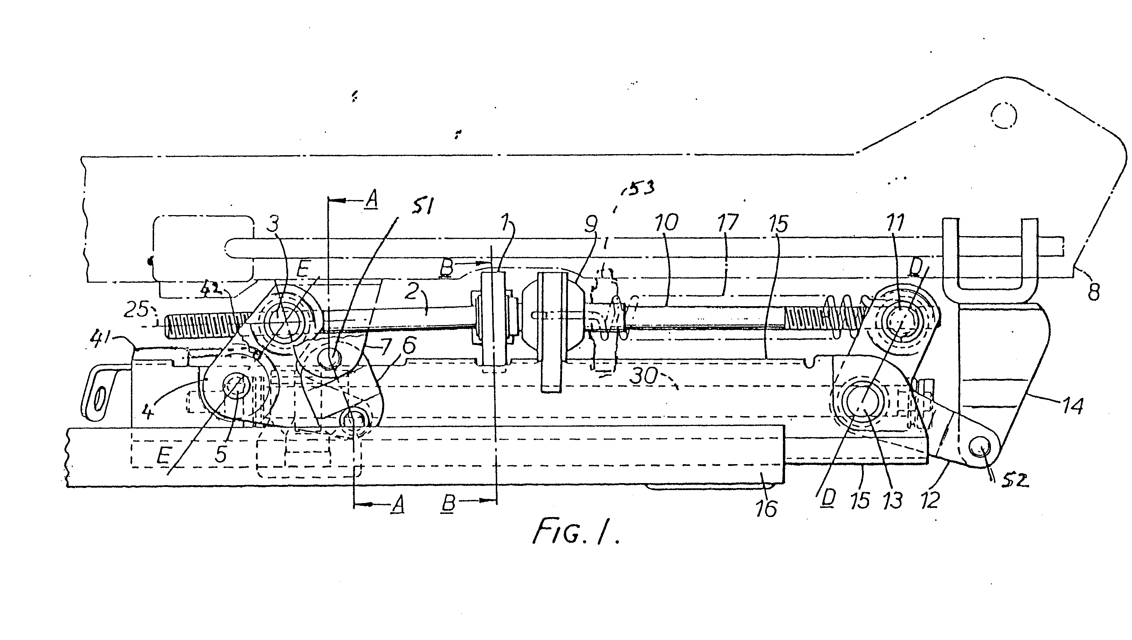

Pivoted on each web 15 at the front 5 and the rear 13 are a pair of bell cranks 4 and 12 which are pivotally connected at the rear ends of their horizontal arms with depending brackets 7 and 14 on the seat, so that as the bell cranks are turned anti-clockwise in FIGURE 1, about their axes 5 and 13, the front and rear of the seat will be raised. A link 6 is included in the connection between the front bell crank 4 and the seat bracket 7 to allow for differential movement of the bell cranks as described below.

The invention is concerned with the means for driving, and controlling the drive of, the vertical arms of the bell cranks. Each bell crank is formed at the upper end of its vertical arm with a housing for a trunnion 3 or 11 which can turn aboiut a horizontal perpendicular to the plane of FIGURE 1, but not about a generally horizontal axis 25 in the plane of FIGURE 1, although it has a threaded bore on that axis through which is threaded one of a pair of drive shafts 2 and 10.

The forward drive shaft 2 is rotated about its axis by a drive including a gear bo 1 with a reduction ratio of about 3:1 and arranged so that a manual or electrical drive to the small input gear which can rotate both shafts 2 at the respective sides of the seat together.

Rotation of each shaft 2 will drive the trunnion 3 together with the upper end of the bell crank 4 forwardly or rearwardly to raise or lower the connection 7 to the seat.

The rear shaft 10 drives its trunnion 11 in relation to the rear bell crank 12 in a similar manner, but the drive to the rear shaft 10 is from the front shaft 2 through a lost motion device indicated generally at 9 and shown in detail in FIGURE 2.

The lost motion device comprises a central support 23 secured to the web 15 and on either side of it a bearing cup 22. The inner end of each shaft 2 and 10 is formed with an external annular flange 31 defining with the cup 22 a race for a ring of balls 21 constituting a ball bearing. The inner end of the shaft 2 is formed with a spigot 32 on which is rotatably mounted a pawl 18 having a bent-over rearwardly extending ear 33 which can co-operate with an integral lug 34 formed externally on the flange 31 on the front end of the shaft 10.

There is a similar pawl 18 on the spigot 37 on the shaft 10, and that has a forwardly extending ear 35 which co-operates with a lug 36 on the flange 31 on the shaft 2.

A ball bearing 19 acts between bearing pads 20 one in a recess in the inner end of each shaft.

Initial rotation of the shaft 2 in either sense is not accompanied by rotation of the pawl 18 so that the front of the seat only is raised

or lowered. After a short period the lug 36 strikes the ear 35 on the rear pawl 18 so that further rotation of the shaft is accompanied by rotation of that pawl on the spigot 37. After further rotation the ear 35 strikes the ear 33 on the spigot 32 and eventually the ear 33 is turned to strike the lug 34 on the flange 31 on the rear shaft; the lost motion has then been completed taken up and further movement of the shaft 2 is accompanied by rotation of the shaft 10, so that the front and the rear of the seat are then raised or lowered together.

When the rear of the seat is at the desired height, if the front of the seat is too high, the drive is reversed and the shaft 2 rotates in the other sense to lower the front of the seat without lowering the rear of the seat until the lost motion has been taken up again. The amount of lost motion corresponds with an angular movement of the front of the seat of perhaps $2\frac{1}{2}^{\circ}$ which is a typical amount of differential angular tilt adjustment that may be required.

It follows that by virtue of the lost motion device, a single drive at 1 can be used first to set the desired height of the rear of the seat and then with reverse drive to set the angle of the front of the seat to the rear of the seat.

A pair of helical springs 17 are mounted one at each side of the rear shaft 10 and extending as tension springs between the lost motion device and the rear bell crank 12 to bias it upwards to tend to counter-balance some of the weight of of the occupant , so that the drive does not have to require excessive power when raising the seat.

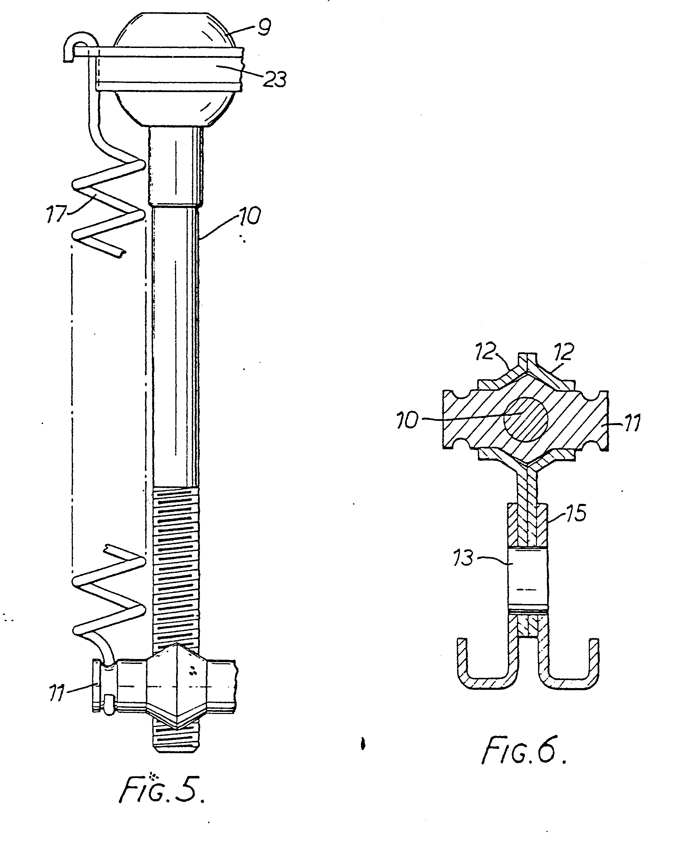

One spring is shown in FIGURE 5, as having ends hooked respectively on the rear trunnion 11 and the support 23. As the seat is lowered, the springs are tensioned and the energy stored is available when the seat is raised again.

The gearbox can contain a digital counting device for counting revolutions to provide data about the particular height of the seat, and that can then be compared with preset heights so that a pre-programming arrangement embodying a microcomputer can enable the seat to be automatically set for different occupants. The count can be of revolutions with one sense, and with the other sense so that both the height and the tilt angle can be determined.

It will be appreciated that the lost-motion in the device 9 is almost three revolutions of the shaft 2. If more lost-motion was required, a plate could be mounted between the flanges 34 and 36, and could have bearings for two additional pawls.

In one example, the lost-motion provided by the device 9 represents about 16mm of vertical movement of the front seat support 51, and the geometry of the bell cranks, ( i.e. length of crank arms, angle of arms, and angle between arms) is such that vertical movement of the front support 51 after the lost-motion has been taken up, is accompanied by the same amount of vertical movement of the rear seat support 52.

Thus, from the lowermost portion of both supports, with the front support lower than the rear support by the maximum amount of 8mm that is likely to be required, first the front support is raised by 16mm, then the front support can rise up to its maximum of a further 40mm while the rear support rises by 40 mm then the front support can be lowered by up to 16mm, without lowering of the rear support, until the sitter has the seat as he likes it.

The system is protected by a limited switch 41 for switching off the motor in extreme positions of the mechanism by means of a spigot 42 on the crank 4.

There are some applications where the customer requires independent raising and lowering of both the front and the rear of the seat. That requires two motors and two gearboxes, but it does not require a radical re-design because it is only necessary to remove the pawls (18) from the lost-motion device 9 and include the second motor and gearbox (53) between the rear shaft 10 and the device 9 which now merely acts as a front journal bearing for the rear shaft 10.

Thus, most of the components will be identical whether the customer requires single-motor or double-motor operation. There may also be a motor for fore-and-aft adjustment. A single motor can drive components on the mountings on each side of the seat.

0098740

## CLAIMS

1. A seat mounting comprising front and rear lifting means (4,12) a drive (1) for one of the lifting means (4) and a lost-motion connection (9) between the two lifting means, or between the drive and the other lifting means (12) whereby operation of the drive first operates one of the lifting means (4), and then operates both lifting means together, whereas reversal of the drive will first operate the one lifting means alone in the opposite sense.

2. A mounting as claimed in Claim 1 including reduction gearing in the drive for the said one of the lifting means.

3. A mounting as claimed in either of the preceding claims including two coaxial shafts (2,10) for driving the respective lifting means and including a lost-motion connection between adjacent co-operating ends of the two shafts.

4. A mounting as claimed in any of the preceding claims in which each of the lifting means comprises a bell crank rotatably mounted about a horizontal axis which is perpendicular to the direction separating the front and rear lifting means.

5. A mounting as claimed in Claim 4 in which the bell crank includes a generally horizontal arm pivotally connected to the seat, and a generally vertical arm coupled to a drive shaft through a non-rotatable nut.

0098740

6.     A mounting as claimed in any of the preceding claims including a spring (17) tending to lift the seat .

7.     A mounting as claimed in any of the preceding claims which is integral with a fore-and-aft seat adjustment mechanism (15,16) .

8.     A seat mounting having two similar components  one at each side of a seat and each being as claimed in any of the preceding claims.

9.     A lost-motion device (9) for a shaft drive comprising axially-spaced, co-axial shafts (2,10) two drive members (18), one rotatably mounted in relation to each shaft, and a stop (36,34) on each shaft arranged to make contact with the drive member on the other shaft at a certain point of revolution.

FIG. 1.

Fig.2.

Fig.3.

Fig.4.

0098740

FIG.5.

FIG.6.